# EUROPEAN PATENT APPLICATION

(11) **EP 4 650 115 A1**
(43) Date of publication of application: **19.11.2025**
(21) Application number: 23916026.0
(22) Date of filing: 13.01.2023
(51) Int. Cl.: B25J 5/00, G05D 1/20

(54) **PRODUCT DISPLAY SYSTEM AND PRODUCT DISPLAY METHOD**

(71) Applicant: Fuji Corporation, Chiryu-shi, Aichi 472-8686 (JP)
(72) Inventor: SAWANAMI, Hisato, Chiryu-shi, Aichi 472-8686 (JP); KAWAGUCHI, Koji, Chiryu-shi, Aichi 472-8686 (JP)
(74) Representative: Grünecker Patent- und Rechtsanwälte PartG mbB
(86) International application number: PCT/JP2023/000770
(87) International publication number: WO 2024/150405

(57) **Abstract**

A product display system for causing an automatic display device capable of recognizing identification information of products to convey and display the products at a display place includes a management section configured to manage display information in which the identification information and position information of the products displayed at the display place are associated with each other, a selection section configured to select a collection target product from the products displayed at the display place based on the display information, and an instruction section configured to transmit, to the automatic display device, a collection instruction for the product including the identification information and the position information of the collection target product.

## Description

### Technical Field

The present description discloses a product display system and a product display method.

### Background Art

Conventionally, a system for displaying and collecting products using a device, such as an articulated robot having an end effector capable of gripping the products, has been proposed. For example, in a system of Patent Literature 1, an image of a product is recognized by a recognition section attached to a robot arm, and a product whose consumption expiration date has passed is selected based on information on the image and collected from a display place.

### Citation List

### Patent Literature

Patent Literature 1:JP-A-2020-44596

### Summary of the Invention

### Technical Problem

In the above-described system, since a collection target product is selected based on the information on the recognized image, it takes a long time to recognize and select the image depending on the number of products, resulting in inefficient collection operation. In addition, a product that has not yet expired may be erroneously collected because of erroneous recognition of the image or the like.

A main object of the present disclosure is to efficiently and appropriately collect a product from a display place.

### Solution to Problem

The present disclosure employs the following means in order to achieve the object described above.

A product display system of the present disclosure is a product display system that causes an automatic display device capable of recognizing identification information of products to convey and display the products at a display place, and includes
a management section configured to manage display information in which the identification information and position information of the products displayed at the display place are associated with each other,
a selection section configured to select a collection target product from the products displayed at the display place based on the display information, and
an instruction section configured to transmit, to the automatic display device, a collection instruction for the product including the identification information and the position information of the collection target product.

In the product display system of the present disclosure, the display information in which the identification information and the position information of the products displayed at the display place are associated with each other is managed. In addition, the collection target product is selected based on the display information, and the collection instruction for the product including the identification information and the position information of the collection target product is transmitted to the automatic display device. As a result, the collection target product can be easily selected from the display information, and the automatic display device does not need to select the collection target product. In addition, since the collection instruction includes the position information of the product, it is possible to suppress erroneous collection of the product. Therefore, it is possible to efficiently and appropriately collect the product from the display place.

### Brief Description of Drawings

Fig. 1 is a diagram illustrating an example of product display system 10.
Fig. 2 is a diagram schematically illustrating a configuration of automatic display device 40 and display shelf 36.
Fig. 3 is a diagram illustrating an example of display information 23a.
Fig. 4 is a sequence illustrating an example of a display process of product G.
Fig. 5 is a sequence illustrating an example of a collection process of product G.
Fig. 6 is a diagram illustrating an example of a state in which product G is displayed.
Fig. 7 is a diagram illustrating an example of a state in which product G is collected.
Fig. 8 is a diagram illustrating an example of a state in which collected product G is displayed at another display place.
Fig. 9 is a flowchart illustrating an example of a collection instruction transmission process.

### Description of Embodiments

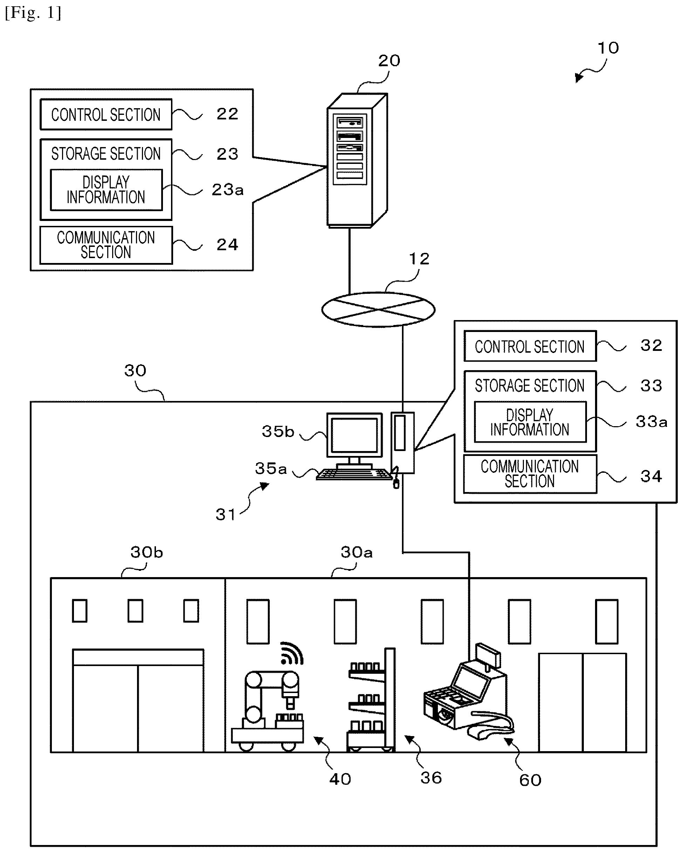

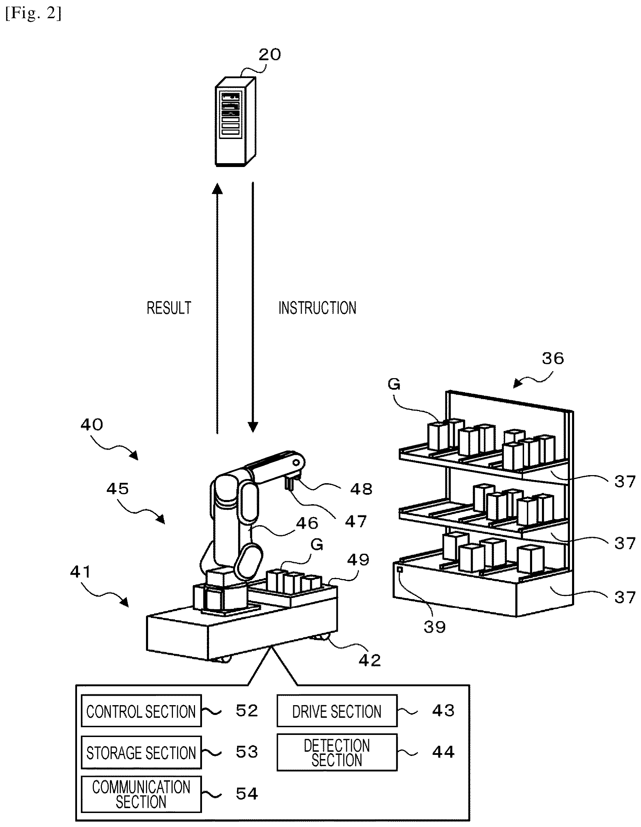

An embodiment of the present disclosure will be described with reference to the drawings. Fig. 1 is a diagram illustrating an example of product display system 10. Fig. 2 is a diagram schematically illustrating a configuration of automatic display device 40 and display shelf 36. Product display system 10 causes automatic display device 40 capable of traveling autonomously while holding product G to display product G by conveying product G to display shelf 36 of store 30 or to collect product G from display shelf 36. Product display system 10 includes management device (system management device) 20 that manages the entire system. In Fig. 1, product display system 10 (management device 20) manages one store 30, but may manage multiple stores 30. In addition, multiple automatic display devices 40 may be provided in each store 30. Automatic display device 40 incorporates a wireless communication function and is connected to network 12.

Store 30 is provided with sales floor 30a for product G and stockroom 30b as an in-store warehouse that stores product G delivered to store 30, and includes store PC 31 for performing sales management, order management, and the like of product G.

In sales floor 30a, one or more display shelves 36 for displaying products G are disposed, and point of sales (POS) terminal 60 is provided. A disposition position of each display shelf 36 is represented by, for example, position coordinates (X, Y) in an XY coordinate system with a predetermined position on a floor surface of sales floor 30a as the origin. In addition, each display shelf 36 includes one or more shelf boards 37 capable of displaying product G, and ID mark 39 provided at a predetermined position to indicate identification information (display shelf ID) of display shelf 36 and a reference position. A display position of product G on shelf board 37 is represented by, for example, position coordinates (x, y, z) in an xyz coordinate system with ID mark 39 as the origin. POS terminal 60 is configured as a well-known POS register, and, in addition to performing an account settlement for product G purchased at store 30, collects a product ID which is identification information of purchased product G, sales information such as the quantity, amount, and sales time of product G, and transmits the collected sales information to store PC 31.

Although not illustrated, one or more storage shelves for storing products G are disposed in stockroom 30b. The storage shelves store products G delivered by a delivery company to be displayed on display shelves 36 by automatic display device 40, products G collected by automatic display device 40, and the like. The disposition position of each storage shelf, the storage position on a shelf board of each storage shelf, and the like are determined in the same manner as display shelf 36.

Store PC 31 includes control section 32, storage section 33, communication section 34, input device 35a, and display device 35b. Control section 32 includes CPU, ROM, RAM, and the like, none of which is illustrated. Storage section 33 is HDD, SSD, or the like, and stores various application programs and various information. Display information 33a similar to display information 23a stored in management device 20 is stored in storage section 33, and details thereof will be described below. Communication section 34 exchanges information with management device 20 via network 12. Input device 35a is a device, such as a keyboard or a mouse, through which a clerk (worker) performs an input operation. Display device 35b is a device that displays various information, such as a liquid crystal display.

In addition, store PC 31 acquires the position coordinates (X, Y) of display shelf 36 disposed in sales floor 30a and the position coordinates (x, y, z) of shelf board 37 disposed on display shelf 36 based on a disposition plan of product G or the like, either automatically or by input from a clerk via input device 35a. Store PC 31 transmits the acquired position coordinates (X, Y) of display shelf 36 and the acquired position coordinates (x, y, z) of shelf board 37 to management device 20. In addition, store PC 31 transmits necessary information from the sales information transmitted from POS terminal 60 to management device 20.

Automatic display device 40 is capable of automatically conveying product G, displaying product G on each display shelf 36, and collecting product G from each display shelf 36. Automatic display device 40 includes vehicle body section 41 capable of autonomous traveling like, for example, an autonomous mobile robot (AMR), and transfer section 45 provided on vehicle body section 41 and capable of transferring product G to and from each display shelf 36.

Vehicle body section 41 includes multiple wheels 42 provided on a lower surface of vehicle body section 41, drive section 43 that drives wheels 42, detection section 44 that detects an object by irradiating a surrounding area with laser light or the like and detecting a reflected wave, and the like. Wheel 42 is configured as, for example, a mecanum wheel having multiple rollers rotatably supported at an angle of 45 degrees with respect to an axle. Wheel 42 may also be configured as an omni wheel having multiple rollers that are rotatable around an axis that three-dimensionally intersects a rotation axis of the wheel. That is, wheel 42 may be any type of wheel as long as it can move or turn vehicle body section 41 in multiple directions. Drive section 43 includes multiple motors for rotationally driving corresponding wheels 42. Vehicle body section 41 can move in all directions and perform various turns (super pivot turn, pivot turn, and gentle turn) by independently controlling the rotation direction and the rotation speed of the corresponding wheel 42 with each motor.

Transfer section 45 includes vertical articulated robot arm 46 and accommodation section 49 that accommodates product G so that product G can be taken in and out by robot arm 46. Robot arm 46 includes multiple links including a distal end link to which end effector 47 and camera 48 are attached, multiple joints that rotatably or turnably connect the links, motors that drive the joints, and the like. End effector 47 is configured as, for example, a mechanical chuck capable of gripping and releasing product G using a pair of clamp claws. As described above, automatic display device 40 of the present embodiment is configured as a display robot capable of autonomous traveling in which robot arm 46 capable of gripping and transferring product G is mounted on vehicle body section 41 capable of autonomous traveling like AMR.

In addition, automatic display device 40 includes control section 52, storage section 53, and communication section 54. Control section 52 includes CPU, ROM, RAM, and the like, none of which is illustrated, and controls vehicle body section 41 and transfer section 45. Storage section 33 is HDD, SSD, or the like, and stores various control programs and various information necessary for traveling in sales floor 30a or stockroom 30b and for transferring product G to and from each display shelf 36. Communication section 54 can wirelessly communicate with management device 20 and the like via network 12. A driving state of drive section 43, a detection state of detection section 44, an image captured by camera 48, information received from management device 20 via communication section 54, and the like are input to control section 52. Control section 52 outputs drive signals to drive section 43, robot arm 46, and end effector 47, imaging signals to camera 48, information to be transmitted to management device 20 via communication section 54, and the like. When automatic display device 40 is not in operation, automatic display device 40 stands by at a standby place provided in stockroom 30b. In the standby place, a battery of automatic display device 40 can be charged by contact or non-contact.

Management device 20 includes control section 22, storage section 23, and communication section 24, and performs management of display of product G on display shelf 36 and collection of product G from display shelf 36, management of information (display information 23a) on product G displayed on display shelf 36, and the like. Control section 22 includes CPU, ROM, RAM, and the like, none of which is illustrated. Storage section 23 is HDD, SSD, or the like, and stores various application programs and various information such as display information 23a. Communication section 24 is connected to store PC 31 in store 30 via network 12 and exchanges information with store PC 31. In addition, communication section 24 can communicate with automatic display device 40 via network 12, transmits an instruction or the like regarding display or collection of product G to automatic display device 40, and receives a result or the like of a display operation or a collection operation performed by automatic display device 40 based on the instruction.

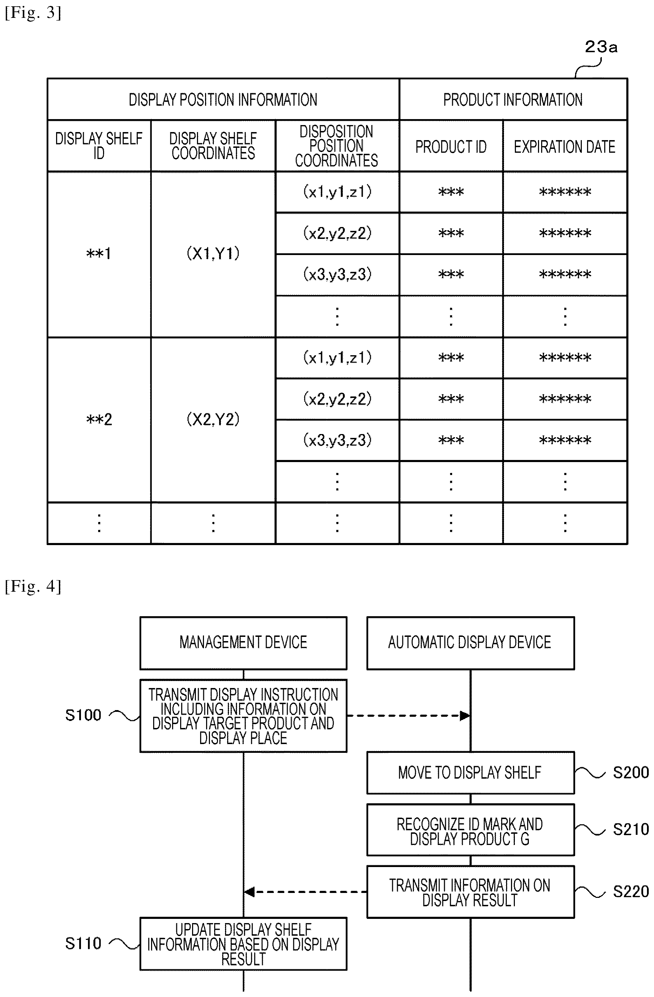

As illustrated in Fig. 3, display position information regarding a display position of product G and product information regarding product G are registered in display information 23a in association with each other. The display position information includes a display shelf ID of display shelf 36 which is a display place, position coordinates (X, Y) ((X1, Y1), (X2, Y2), ...) of display shelf 36, and position coordinates (x, y, z) ((x1, y1, z1), (x2, y2, z2), ...) of a disposition position on shelf board 37. The product information includes a product ID which is identification information of product G, and an expiration date such as a consumption expiration date or a best-before date of product G. Automatic display device 40 may grip multiple products G with same product ID and collectively display products G on display shelf 36 (shelf board 37). In this case, management device 20 needs only to register the quantity of products G collectively displayed in association with the same position coordinates (x, y, z).

Management device 20 acquires information on the expiration date of product G and registers the information in display information 23a. For example, management device 20 needs only to access a database of a manufacturer or a sender of product G and acquire the information on the expiration date of product G based on the product ID. Alternatively, management device 20 may acquire the information on the expiration date recognized from an image of product G captured by camera 48 of automatic display device 40 when product G is displayed, via communication with automatic display device 40. In addition, when receiving the product ID of purchased product G from store PC 31, management device 20 deletes product G with the product ID from display information 23a and updates display information 23a.

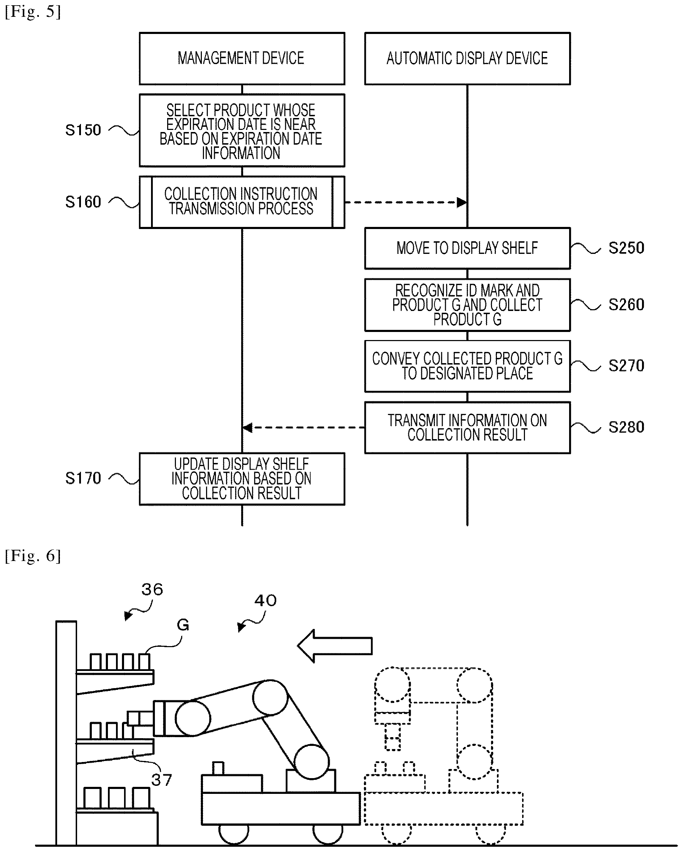

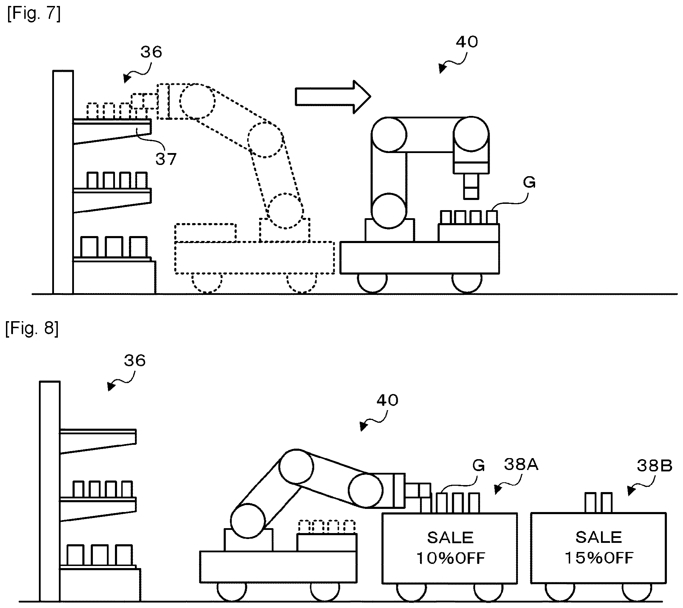

Product display system 10 configured in this manner manages display and collection of product G as follows. Fig. 4 is a sequence illustrating an example of a display process of product G. Fig. 5 is a sequence illustrating an example of a collection process of product G. In addition, Fig. 6 is a diagram illustrating an example of a state in which product G is displayed. Fig. 7 is a diagram illustrating an example of a state in which product G is collected. Fig. 8 is a diagram illustrating an example of a state in which collected product G is displayed at new display place.

The display process of Fig. 4 is executed, for example, when product G needs to be displayed (replenished) on display shelf 36 based on a sales status (sales information of POS terminal 60), an inventory status, or the like of product G in store 30. In the display process, control section 22 of management device 20 transmits a display instruction including information on display target product G and information on the display place to automatic display device 40 (S100). The information on the display place includes a display shelf ID and position coordinates (X, Y) of display shelf 36. In addition, the information on the display place may include position information (x, y, z) for disposing product G, or information on a range on shelf board 37 where product G can be disposed. For example, in order to dispose product G on one of shelf boards 37 (middle shelf board 37 in Fig. 6) of display shelf 36, information on a range on shelf board 37 may be included.

When receiving the display instruction transmitted in S100, automatic display device 40 moves by autonomously traveling toward designated display shelf 36 in a state where necessary product G is accommodated in accommodation section 49 (S200). Control section 52 of automatic display device 40 autonomous travels by controlling vehicle body section 41 using the position coordinates (X, Y) of display shelf 36 as a destination. In addition, control section 52 obtains a movement direction, a movement distance, a current position, and the like of vehicle body section 41 based on the driving state of drive section 43, and detects the presence or absence of an obstacle based on the detection state of detection section 44. Control section 52 may receive position information such as a GPS signal to obtain the current position.

In addition, when automatic display device 40 reaches designated display shelf 36, control section 52 recognizes ID mark 39 of display shelf 36 by capturing an image with camera 48, and then causes robot arm 46 (end effector 47) to display product G (S210). In S210, control section 52 processes the image captured by camera 48 and recognizes the origin position of the xyz coordinate system described above, and then uses robot arm 46 to take out product G from accommodation section 49 and display product G by disposing product G in a position designated by the display instruction (see Fig. 6). Control section 52 may display product G after imaging the position designated by the display instruction with camera 48 to confirm that no other product G is disposed or after imaging product G with camera 48 to confirm the product ID.

When product G is displayed, control section 52 transmits information on a display result to management device 20 (S220). The information on the display result includes a product ID and position information of displayed product G. The position information includes a display shelf ID and position information (x, y, z) of a disposition position of product G. In addition, when receiving the information on the display result transmitted in S220, control section 22 of management device 20 updates display information 23a based on the display result (S110). That is, control section 22 performs a process such as registering the product ID and the position information in display information 23a. Control section 22 transmits the updated information to store PC 31 to update display information 33a of store PC 31.

Next, the collection process will be described. In the collection process of Fig. 5, control section 22 of management device 20 acquires expiration date information of product G from display information 23a, and selects product G whose expiration date is near based on the expiration date information of product G (S150). Control section 22 compares, for example, a current date with an expiration date of product G, and selects product G whose number of days until the expiration date is a predetermined number of days or less as product G whose expiration date is near. If there is no product G whose expiration date is near, the collection process needs only to be ended without selecting product G.

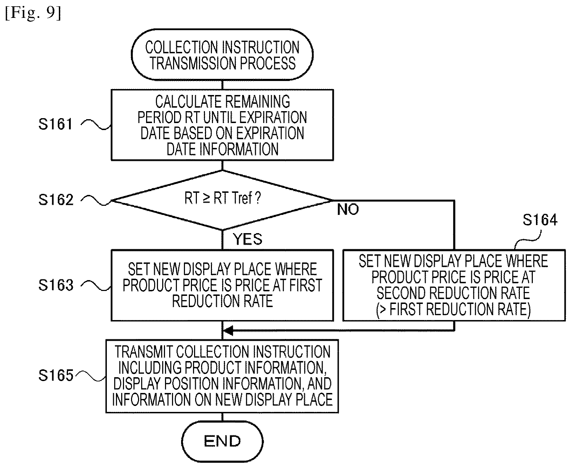

When product G is selected in S150, management device 20 executes a collection instruction transmission process of transmitting a collection instruction for product G to automatic display device 40 (S160). Fig. 9 is a flowchart illustrating an example of the collection instruction transmission process. In the collection instruction transmission process, control section 22 calculates remaining period RT until the expiration date of product G selected in S150 (S161). Control section 22 calculates the number of days until the expiration date as remaining period RT based on, for example, the current date and the expiration date of product G. Next, control section 22 determines whether remaining period RT is equal to or longer than predetermined period RTref (S162).

When it is determined that remaining period RT is equal to or longer than predetermined period RTref, control section 22 sets a new display place where the sales price of product G is the price at a first reduction rate (first discount rate) (S163). In addition, when it is determined that remaining period RT is not equal to or longer than predetermined period RTref and is shorter than predetermined period RTref, control section 22 sets a new display place where the sales price of product G is the price at a second reduction rate (second discount rate) (S164). The second reduction rate is a reduction rate larger than the first reduction rate. As described above, when remaining period RT until the expiration date is shorter than predetermined period RTref, control section 22 sets a display place with a higher reduction rate (discount rate) of the sales price than when remaining period RT is equal to or longer than predetermined period RTref. Subsequently, control section 22 transmits a collection instruction including the product information, the information on the current display position, and the position information of the new display place set in S163 and S164 to automatic display device 40 (S165), and ends the collection instruction transmission process.

When receiving the collection instruction transmitted in S160 (S165), automatic display device 40 moves by autonomously traveling toward designated display shelf 36 (S250). The autonomous traveling of automatic display device 40 is the same as in S200 of the display process, and thus the description thereof will be omitted. In addition, when automatic display device 40 reaches designated display shelf 36, control section 52 recognizes ID mark 39 of display shelf 36 and collection target product G by capturing an image with camera 48, and then causes robot arm 46 (end effector 47) to collect product G (S260). For example, Fig. 7 illustrates a state in which four products G are collected from upper shelf board 37.

Subsequently, automatic display device 40 conveys collected product G to the designated place (S270). As described above, since the collection instruction in S165 includes the information on the new display place, automatic display device 40 moves to the new display place and displays product G in S270. For example, as illustrated in Fig. 8, automatic display device 40 conveys and displays product G on one of display carts 38A and 38B which are new display places. Although not illustrated, display carts 38A and 38B are also provided with ID marks 39 at predetermined positions. In addition, the process of S270 is similar to that of S200 and S210, and thus the description thereof will be omitted.

Here, as described above, when remaining period RT until the expiration date of product G is relatively long, collected product G is conveyed to and displayed on display cart 38A with a relatively small discount rate. In addition, when remaining period RT until the expiration date of product G is short, collected product G is conveyed to and displayed on display cart 38B with a relatively large discount rate. In this way, since products G whose expiration dates are near are collected and displayed on display carts 38A and 38B different from original display shelf 36, it is possible to promote the sales of products G whose expiration dates are near. In addition, by increasing the price reduction rate of product G as remaining period RT becomes shorter, it is possible to further promote the sales of product G whose expiration date is nearer.

When control section 52 of automatic display device 40 conveys collected product G to the designated place or displays collected product G at the place, control section 52 transmits information on a collection result to management device 20 (S280). The information on the collection result includes a product ID of collected product G, original position information where product G is displayed, and position information of a storage place or a new display place of collected product G. In addition, when receiving the information on the collection result transmitted in S280, control section 22 of management device 20 updates display information 23a based on the collection result (S170). That is, control section 22 searches for information in which the product ID matches the original position information, and performs a process such as updating to new position information. Control section 22 transmits the updated information to store PC 31 to update display information 33a of store PC 31.

Here, a correspondence relationship between the elements of the present embodiment and the elements of the present disclosure will be clarified. Control section 22 that executes S110 of the display process and S170 of the collection process of the present embodiment corresponds to an information management section, control section 22 that executes S150 of the collection process corresponds to a selection section, and control section 22 that executes S160 of the collection process corresponds to an instruction section. In the present embodiment, an example of a product display method of the present disclosure is also clarified by describing the processing of product display system 10.

In product display system 10 described above, management device 20 manages display information 23a in which the product ID (identification information) of product G on display shelf 36 (display place) and the position information are associated with each other. In addition, management device 20 selects collection target product G based on display information 23a, and transmits the collection instruction including the product ID and the position information of collection target product G to automatic display device 40. As a result, collection target product G can be easily selected from display information 23a, and automatic display device 40 does not need to select the collection target product G. In addition, since the collection instruction includes the position information of product G, it is possible to suppress erroneous collection of product G. Therefore, it is possible to efficiently and appropriately collect product G from display shelf 36.

In addition, since management device 20 manages display information 23a by associating the product ID and the position information with the expiration date information of product G, it is possible to easily select product G whose expiration date has passed or product G whose expiration date is near as the collection target and collect product G.

In addition, management device 20 transmits, to automatic display device 40, the collection instruction including an instruction to convey and display collection target product G at display cart 38 (38A and 38B) that is a display place other than original display shelf 36. Display cart 38 is a place where product G is sold at a price lower than the price when displayed on original display shelf 36. Therefore, collected product G can be displayed on display cart 38 to promote sales.

As display cart 38, multiple display carts 38A and 38B with different price reduction rates are present. Management device 20 includes, in the collection instruction, an instruction to convey and display product G at display cart 38 that applies a higher price reduction rate as product G approaches its expiration date. Therefore, it is possible to promote the sales of product G whose expiration date is near.

In addition, management device 20 acquires, from automatic display device 40, the display result including the product ID and the position information of product G displayed on display shelf 36, and updates display information 23a. Management device 20 acquires, from automatic display device 40, the collection result including the product ID of product G collected from display shelf 36 and the original position information where product G is displayed, and updates display information 23a. Therefore, the display result or the collection result of product G by automatic display device 40 can be quickly reflected in display information 23a.

The present disclosure is not limited in any way to the above-described embodiment, and it is needless to say that the present disclosure can be embodied in various aspects as long as the various aspects fall within the technical scope of the present disclosure.

In the embodiment, management device 20 manages display information 23a, selects collection target product G, and transmits an instruction to automatic display device 40; however, the configuration is not limited to this, and store PC 31 may perform some of these operations. For example, store PC 31 may acquire the display result and the collection result from automatic display device 40, acquire the sales information from POS terminal 60, update display information 33a, and transmit updated display information 33a to management device 20. Management device 20 needs only to update display information 23a based on the information transmitted from store PC 31. In addition, management device 20 and store PC 31 are not limited to performing various processes in cooperation with each other, and store PC 31 may perform various processes alone.

In the embodiment, two display carts 38A and 38B with different price reduction rates are exemplified; however, the configuration is not limited to this, and there may be three or more display places. In addition, product G is displayed on display cart 38 that applies a higher price reduction rate as its expiration date approaches; however, the configuration is not limited to this, and collected product G may be displayed on one display cart 38 regardless of remaining period RT until the expiration date. In addition, collected product G needs only to be conveyed to a display place other than original display shelf 36, and may be conveyed to and displayed on other display shelf 36 without being limited to display cart 38.

In the embodiment, product G whose expiration date is near is selected as the collection target; however, the configuration is not limited to this, and product G whose expiration date has passed may be selected as the collection target. In this case, the collection instruction need only include an instruction to convey collection target product G to the storage shelf of stockroom 30b.

In the embodiment, management device 20 manages display information 23a including the expiration date information; however, the configuration is not limited to this, and display information 23a may be managed without including the expiration date information, and product G may be collected regardless of the expiration date of product G. For example, management device 20 may select collection target product G based on a status of a sales performance of product G, a sales status according to the time (season), an instruction from a clerk of store 30, or the like, and transmit a collection instruction for product G to automatic display device 40.

In addition, when it is necessary to relocate product G from display shelf 36 when changing a layout of sales floor 30a, management device 20 may transmit a collection instruction for product G that needs to be relocated to automatic display device 40. Then, after the change of the layout is completed, management device 20 needs only to transmit a display instruction for relocated product G to automatic display device 40. Alternatively, when store 30 is a store corresponding to a so-called online supermarket that receives an order of product G via network 12, management device 20 may transmit a collection instruction for ordered product G to automatic display device 40. Collected product G needs only to be collected in, for example, stockroom 30b in order to be delivered to a customer.

The present description also discloses a technical idea in which "the product display system according to Claim 1 or 2" in Claim 5 as originally filed is changed to "the product display system according to any one of Claims 1 to 4".

### Industrial Applicability

The present disclosure is applicable to a system that performs display management and collection management of products.

### Reference Signs List

10: Product display system, 12: Network, 20: Management device, 22, 32, 52: Control section, 23, 33, 53: Storage section, 23a, 33a: Display information, 24, 34, 54: Communication section, 30: Store, 30a: Sales floor, 30b: Stockroom, 31: Store PC, 35a: Input device, 35b: Display device, 36: Display shelf, 37: Shelf board, 38A, 38B: Display cart, 39: ID mark, 40: Automatic display device, 41: Vehicle body section, 42: Wheel, 43: Drive section, 44: Detection section, 45: Transfer section, 46: Robot arm, 47: End effector, 48: Camera, 49: Accommodation section (Mounting section), 60: POS terminal, G: product.

## Claims

1. A product display system for causing an automatic display device capable of recognizing identification information of products to convey and display the products at a display place, the product display system comprising:
a management section configured to manage display information in which the identification information and position information of the products displayed at the display place are associated with each other;
a selection section configured to select a collection target product from the products displayed at the display place based on the display information; and
an instruction section configured to transmit, to the automatic display device, a collection instruction for the product including the identification information and the position information of the collection target product.

2. The product display system according to Claim 1,
wherein the management section manages the display information by associating the identification information and the position information of the products with expiration date information of the products, and
the selection section selects the collection target product based on the expiration date information of the products.

3. The product display system according to Claim 1 or 2,
wherein the instruction section transmits, to the automatic display device, the collection instruction including an instruction to convey and display the collection target product at a display place other than an original display place, and
the other display place is a display place where the product is sold at a price lower than a price when the product is displayed at the original display place.

4. The product display system according to Claim 3,
wherein the management section manages the display information by associating the identification information and the position information of the products with expiration date information of the products,
as the other display place, multiple display places with different price reduction rates are present, and
the instruction section transmits, to the automatic display device, the collection instruction including an instruction to convey and display the collection target product at a display place that applies a higher price reduction rate as the collection target product approaches its expiration date, based on the expiration date information of the products.

5. The product display system according to Claim 1 or 2,
wherein the management section acquires the identification information of the products displayed at the display place and the position information of the products from the automatic display device to update the display information, and acquires identification information of a product collected from the display place and original position information where the product is displayed from the automatic display device to update the display information.

6. A product display method of causing an automatic display device capable of recognizing identification information of products to convey and display the products at a display place, the product display method comprising:
(a) a step of managing display information in which the identification information and position information of the products displayed at the display place are associated with each other;
(b) a step of selecting a collection target product from the products displayed at the display place based on the display information; and
(c) a step of transmitting, to the automatic display device, a collection instruction for the product including the identification information and the position information of the collection target product.
